# EUROPEAN PATENT APPLICATION

(11) **EP 0 540 155 A2**
(43) Date of publication of application: **05.05.1993**
(21) Application number: 92308210.1
(22) Date of filing: 10.09.1992
(51) Int. Cl.: G06F 7/48, G06F 9/30

(54) **Digital limit checking system**

(30) Priority: 29.10.1991 US 783846
(71) Applicant: ADVANCED MICRO DEVICES, INC., Sunnyvale, CA 94088 (US)
(72) Inventor: Bartkowiak, John G., Austin, Texas 78735 (US); Nix, Michael A., Buda, Texas 78610 (US)
(74) Representative: Wright, Hugh Ronald

(57) **Abstract**

A digital limit checking system determines whether a multiple-bit input operand is at least equal to or less than a multiple-bit boundary value. The system includes a first and second multiple-bit buses, a first memory coupled to the first bus for receiving and storing the multiple-bit boundary value, and a second memory coupled to the second bus for receiving and storing the multiple-bit input operand. The system further includes a multiple-bit summer having a first input coupled to the first bus for receiving the multiple-bit boundary value from the first memory, a second input coupled to the second bus for receiving the multiple-bit input operand from the second memory, and an output. The summer sign inverts either the boundary value or the input operand and provides a difference value having a sign bit. A multiple-bit accumulator coupled to the summer receives and stores the multiple-bit difference value including the sign bit. An output means coupled to the accumulator returns either a first multiple-bit output or a second multiple-bit output responsive to the sign bit.

## Description

The present invention generally relates to a digital limit checking system.

Such a digital limit checking system may be used, for example, in a digital signal processor, which provides digital limit checking without the need for the digital signal processor to jump to specialized service routines.

Digital signal processors are well known in the art. Such processors generally perform arithmetic manipulations and operations upon multiple-bit operands under the control of operating instructions provided by an instruction memory.

The arithmetic manipulations and operations of digital signal processors are widely varied. At times, digital signal processors are called upon to perform limit checking wherein the value of an operand is compared to a boundary value to determine if the operand is greater than or equal to the boundary value or less than the boundary value. Such limit checking may further require a window comparison wherein it is determined whether the operand is greater than a first boundary value, less than a second and smaller boundary value, or in between the first and second boundary values. After the limit checking is performed, a digital signal processor may further be required to return one of multiple possible output operands, the output operand being returned being dependent upon the result of the limit checking.

While prior art digital signal processors have been able to perform such limit checking, their operation in this regard has left much to be desired. For example, prior art digital signal processors, in order to perform the required limit checking operations, generally must jump to specialized service routines particularly arranged for such functions. This requires their instruction memory sequences to jump out of sequence rendering the instruction memory control extremely complicated in terms of accessing the proper instructions and then, after the limit checking is performed, to return to where the sequences were at the time of the jump. Further, digital signal processors have had to employ additional hardware beyond, for example, their normal arithmetic logic units, to perform the limit checking operations. The additional hardware together with the number of operating cycles required during the subroutine jump and the return from the subroutine jump result in considerable power consumption attributable to the limit checking functions. This of course is undesirable, especially when the digital signal processor is employed in portable equipment which is powered by a depletable power source, such as a battery.

The described preferred embodiment of the present invention overcomes these above noted disadvantages in the prior art by providing a limit checking system which makes use of the digital signal processor arithmetic logic unit for performing the limit checking operations and a simple output stage for returning the required output operands. This results in jump routines not to be required rendering faster limit checking operations in fewer operating cycles and less complicated instruction memory sequencing control.

The invention provides a digital limit checking system for determining whether an input operand is at least equal to or less than a boundary value. The system includes a first bus, a second bus, first storage means coupled to the first bus for storing the boundary value, and second storage means coupled to said second bus for storing the input operand.

The system further includes difference means including a first input coupled to the first bus for receiving the boundary value from the first storage means, a second input coupled to the second bus for receiving the input operand from the second storage means, and an output. The difference means determines the difference between the boundary value and the input operand and provides a difference value having a positive or a negative sign. The system further includes output means responsive to the sign of the difference value for providing a first output when the sign is positive and a second output when the sign is negative.

The invention further provides a digital limit checking system for determining whether a multiple-bit input operand is at least equal to or less than a multiple-bit boundary value. The system includes a first multiple-bit bus, a second multiple-bit bus, first storage means coupled to the first bus for receiving and storing the multiple-bit boundary value, and second storage means coupled to the second bus for receiving and storing the multiple-bit input operand. The system further includes a multiple-bit summer having a first input coupled to the first bus for receiving the multiple-bit boundary value from the first storage means, a second input coupled to the second bus for receiving the multiple-bit input operand from the second storage means, and an output. The summer is configured for sign inverting either the boundary value or the input operand and provides a multiple-bit sum of the sign inverted boundary value or input operand and the noninverted boundary value or input operand, the multiple-bit sum having a sign bit. The system further includes a multiple-bit accumulator coupled to the summer for receiving and-storing the multiple-bit sum including the sign bit, and output means coupled to the accumulator for receiving the sign bit from the accumulator and providing either a first multiple-bit output or a second multiple-bit output responsive to the sign bit.

### BRIEF DESCRIPTION OF THE DRAWINGS

The features of the present invention which are considered to be novel are set forth with particularity in the appended claims. The invention, together with further objects and advantages thereof, may best be understood by making reference to the following description taken in conjunction with the accompanying drawings, in the several figures of which like reference numerals identify identical elements, and wherein:
Figure 1 is a detailed block diagram of a digital signal processor employing a limit checking system embodying the present invention; and
Figure 2 is a detailed block diagram of the unidirectional shift register and its related control illustrated in Figure 1.

### DETAILED DESCRIPTION

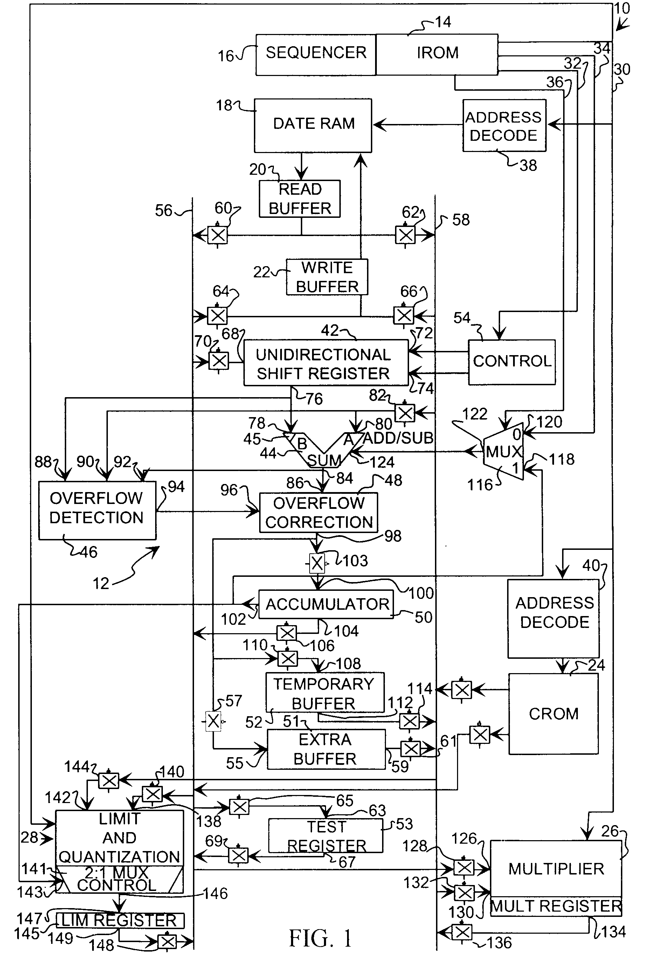

Referring now to Figure 1, it illustrates, in detailed block diagram form, a digital signal processor 10 incorporating a digital limit checking system embodying the present invention which utilizes the digital signal processor arithmetic logic unit 12 in accordance with the present invention. The digital signal processor 10 in addition to the arithmetic logic unit 12 generally includes an instruction memory (IROM) 14 and an associated sequencer 16, a data memory 18, a read buffer 20, a write buffer 22, a constants memory 24, a multiplier section 26, and a limit and quantization section 28.

The digital signal processor 10 performs digital processing under the control of the instruction memory 14 which provides an operating instruction during each operating cycle of the digital signal processor 10. The instruction memory 14 is sequenced by the sequencer 16 for issuing the operating instructions one at a time under the control of the sequencer 16. The instructions are provided by the instruction memory 14 over an 8-bit address bus 30, a 3-bit shift/mask control bus 32, and control lines 34 and 36. The address bus 30 is coupled to an address decoder 38 which decodes addresses for the data memory 18, an address decoder 40 which decodes addresses for the constants memory 24, the multiplier section 26, and the limit and quantization section 28. Control line 34 provides a control signal for causing multiple-bit data to be two's compliment inverted in a manner to be described hereinafter, and the control line 36 provides an enable signal which is utilized in a manner to be described hereinafter.

The arithmetic logic unit 12 includes a shift register 42, a summer 44, an overflow detector 46, and an overflow correction 48. The arithmetic logic unit 12 further includes an accumulator 50, a temporary buffer 52, a control 54 for shift register 42, first and second buses 56 and 58 respectively, an extra buffer 51, and a test register 53.

The read buffer 20 is coupled to the data memory 18 and to the first and second buses 56 and 58 respectively by CMOS transfer gates 60 and 62 respectively. Such CMOS transfer gates are well known in the art and, as is well known, when activated, provide a low impedance path and when deactivated provide a high impedance path or isolation. Other such transfer gates referred to hereinafter will be referred to simply as transfer gates.

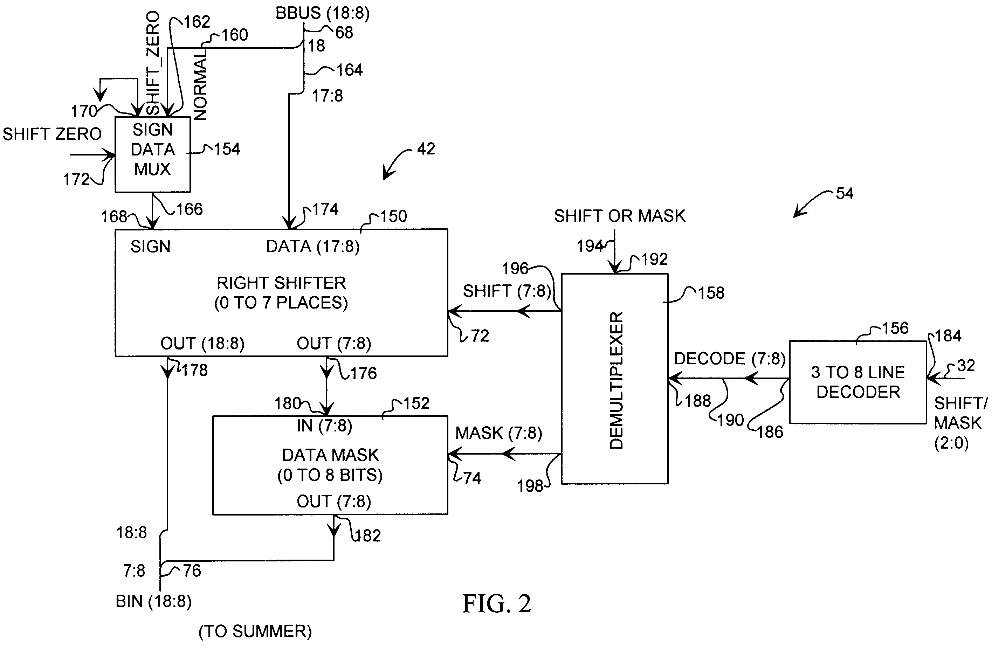

Write buffer 22 is coupled to the data memory 18 and to the first and second buses 56 and 58 respectively by transfer gates 64 and 66 respectively. Shift register 42 is preferably a unidirectional shift register for shifting multiple-bit data to the right by a number of bits responsive to the shift/mask control signals provided over bus 32. The unidirectional shift register 42 and its control 54 will be described in greater detail subsequently with respect to Figure 2. The unidirectional shift register includes an input 68 which is coupled to the first bus 56 by transfer gate 70. The input 68 is a multiple-bit input for receiving multiple-bit operand data from the first bus 56. The unidirectional shift register 42 further includes a first control input 72 coupled to control 54 and a second control input 74 coupled to control 54. Lastly, unidirectional shift register 42 includes an output 76 which is a multiple-bit output for transferring multiple-bit operand data to a first input 78 of summer 44. As will be seen hereinafter, the multiple-bit data transferred from output 76 may be either unshifted, shifted to the right, masked, or sign bit forced in a manner to be described hereinafter.

Summer 44, in addition to its first input 78, includes a second input 80 which is coupled to the second bus 58 by a transfer gate 82. The summer 44 includes a multiple-bit output 84 which is coupled to a multiple-bit input 86 of overflow correction 48 and sign inverting means 45 associated with the first input 78 for two's compliment inverting multiple-bit operand at input 78 in a manner to be described subsequently.

The overflow detector 46 includes a first input 88 which is coupled to the first input 78 of summer 44, a second input 90 which is coupled to the second input 80 of summer 44, and a third input 92 which is coupled to the output 84 of summer 44. The overflow detector 46 also includes an output 94 which is coupled to a control input 96 of overflow correction 48. Overflow correction 48 includes a multiple-bit output 98 which is coupled to a multiple-bit input 100 of accumulator 50 through a transfer gate 103.

The accumulator 50 is a multiple-bit accumulator wherein the most significant bit of the accumulator is a sign bit for the multiple-bit operand data stored therein. The accumulator 50 includes an output 102 which provides the value of the sign bit of the multiple-bit operand data stored therein and a multiple-bit output 104 which is coupled to the first bus 56 through a transfer gate 106.

The temporary buffer 52 includes a multiple-bit input 108 which is coupled to the output 98 of overflow correction 48 through a transfer gate 110. Temporary buffer 108 further includes a multiple-bit output 112 which is coupled to the second bus 58 through a transfer gate 114.

The extra buffer 51 includes a multiple-bit input 55 which is also coupled to the output 98 of overflow correction 98 through a transfer gate 57. The extra buffer 51 also includes a multiple-bit output 59 which is coupled to the second bus 58 through a transfer gate 61.

The test register 53 includes a multiple-bit input 63 which is coupled to the first bus 56 through a transfer gate 65. The test register 53 further includes a multiple-bit output 67 which is coupled to the first bus 56 through a transfer gate 69.

The arithmetic logic unit 12 further includes a multiplexer 116 which forms a two's compliment inversion control means whose operation will be described subsequently. The multiplexer 116 includes a first input 118 coupled to the output 102 of accumulator 50, a second input 120 coupled to control line 34, and an output 122 which is coupled to an input 124 of summer 44.

The multiplier section 26 in addition to being coupled to the bus 30 includes an input 126 which is coupled to the first bus 56 through a transfer gate 128, a second input 130 which is coupled to the second bus 58 through a transfer gate 132, and an output 134 which is coupled to the second bus 58 through a transfer gate 136.

The limit and quantization section 28 forms an output means and includes a multiplexer 141 having an input 138 coupled to the first bus 56 through a transfer gate 140, another input 142 which is coupled to the second bus 58 through a transfer gate 144 and an output 146. The output means further includes a latch 145 having a multiple-bit input 147 coupled to multiplexer output 146 and an output 149 which is coupled to the first bus 56 through another transfer gate 148. The multiplexer 141 includes a control input 143 which is coupled to output 102 of accumulator 50 for receiving the previously mentioned sign bit from the accumulator 50. As will be seen hereinafter, the multiplexer 141 selectively couples input 138 to output 146 when the sign bit is a logical zero (positive sign) and input 142 to output 146 when the sign bit is a logical one (negative sign).

The digital signal processor 10 and thus the arithmetic logic unit 12, in accordance with this preferred embodiment, performs manipulations and operations upon multiple-bit operand data containing up to nineteen bits wherein the most significant bit, as originally aligned within the arithmetic logic unit 12, is the sign bit of the multiple-bit operand data and the remaining eighteen bits are available as magnitude bits. Also in accordance with this preferred embodiment, the unidirectional shift register 42 is configured for shifting the multiple-bit operand data up to seven bits to the right and masking up to eight consecutive bits of the eight least significant bits of the multiple-bit operand data. Also, the unidirectional shift register 42 is configured for forcing the sign bit of the multiple-bit operand data to a predetermined value of, for example, zero.

The summer 44 in conjunction with the multiplexer 116 is configured for adding an operand at its first input 78 to an operand at its second input 80, subtracting an operand at its first input 78 from an operand at its second input 80, and performing, with the sign inverting means 45, a two's compliment inversion operation upon an operand at its first input 78. In accordance with techniques known in the art, the shift register 42 also sign extends the most significant bits of those operands which it shifts to the right.

Referring now to Figure 2, it illustrates in greater detail the unidirectional shift register 42 and the shift/mask control means 54 illustrated in Figure 1. The unidirectional shift register 42 generally includes a right shifter 150, a data mask 152, and a force sign means 154 in the form of a sign data multiplexer. The shift/mask control means 54 includes a decoder 156 and a demultiplexer 158.

The input 68 of the unidirectional shift register 150 is divided such that the nineteenth bit (sign bit) is conveyed over a line 160 to an input 162 of the data sign multiplexer 154. The output 166 of the sign data multiplexer 154 is coupled to the nineteenth bit input (sign bit input) 168 of the right shifter 150. The sign data multiplexer 154 includes another input 170 which is coupled to ground potential and a control input 172 which is coupled to the instruction memory for receiving a force sign control signal from the instruction memory. The other eighteen bits of input 68 are coupled by a bus 164 to an 18-bit input 174 of the right shifter 150.

The right shifter 150 includes a pair of multiple-bit outputs including a first output 176 which provides the first eight bits and output 178 which provides the last or more significant eleven bits. The output 176 is coupled to an 8-bit input 180 of data mask 152. Data mask 152 includes an 8-bit output 182 which are combined with the output 178 of the right shifter for providing the 19-bit output 76.

Decoder 156 includes a control input 184 which is coupled to the control bus 32 for receiving the shift-mask control signals from the instruction memory and an 8-bit output 186 which is coupled to an 8-bit input 188 of demultiplexer 158. The decoder 156 receives the 3-bit shift/mask control signals from the instruction memory 14 and decodes those signals to generate an intermediate control signal over an 8-bit bus 190 indicative of the number of bits in which operand data is to be shifted to the right or the number of bits of a multiple-bit operand to be masked. The demultiplexer includes a control input 192 which is coupled to the instruction memory 14 over a line 194 for receiving a shift or mask control signal. When the demultiplexer receives a shift control signal from the instruction memory, it will convey the intermediate control signals on line 190 to its first output 196 to be conveyed to the shift control input 72 to control the right shift. Similarly, if the input 192 receives a mask control signal, it will couple the intermediate control signals on line 190 to its second output 198 to be conveyed to the mask control input 74 of data mask 152 to control the masking operation.

With further reference to Figure 2, when the shift register 42 is to perform a force zero on the sign bit of a multiple-bit operand, the operand is received at input 68 with the sign bit being conveyed to input 162 of the sign data multiplexer 154 and the remainder of the bits of the multiple-bit operand conveyed to input 174. The sign data multiplexer 154 receives at its control input 172 a force zero control signal from the instruction memory causing the sign data multiplexer 154 to select input 170 for forcing the sign bit at output 166 to a logical zero. The logical zero sign bit is conveyed to the input 168 of the right shifter. Such a force zero of the sign bit may be required when a multiple-bit operand is in signed magnitude format and is a negative number which needs to be converted to two's compliment format by the summer 44 in a manner to be described hereinafter.

For providing a shift operation to a multiple-bit operand, the multiple-bit operand is received at input 168. Again, the sign bit of the multiple-bit operand to be shifted is conveyed over line 160 and to input 168. The sign bit may be either forced to zero or unchanged by the sign data multiplexer 154. The remainder of the bits of the multiple-bit operand (the magnitude bits) are received at input 174. The shift or mask control signal on line 194 will indicate a shift operation which is normally the case unless a mask operation is to occur. The instruction register will provide over bus 32 a three bit binary number indicating the number of bits that the multiple-bit operand is to be shifted to the right. The multiple-bit operand may be shifted from zero to seven bits to the right by the right shifter 150. This corresponds to the three bit shift/mask control signal over bus 32 being anywhere between 000 and 111 at input 184 of the 3 to 8 decoder 156. If, for example, the multiple-bit operand is to be shifted two bits to the right, the 3-bit control signal at input 184 will be 010.

The 3-bit control signal at input 184 is decoded by decoder 156 to form the intermediate control signal on bus 190. Because the demultiplexer at input 192 receives a shift control signal from the instruction memory, the intermediate control signal on lines 190 will be conveyed to output 196 and to input 72 of the right shifter 150. The right shifter thereafter shifts the multiple-bit operand two places to the right and, while conducting such shifting, sign extends the multiple-bit operand. In other words, the seventeenth, eighteenth, and nineteenth bits will all contain the sign of the multiple-bit operand which has been shifted. If the sign bit had been forced to zero by the sign data multiplexer 154, the sign bits will be all zeros.

For masking a multiple-bit operand at input 68, again, the sign bit is received at input 168 and the magnitude bits are received at input 174. The shift or mask control signal on line 194 will indicate a mask operation to input 192 of the demultiplexer 158. The shift/mask 3-bit control signal on bus 32 will indicate the bits to be masked. For example, if the 3-bit control signal at input 184 is 000, the first bit will be masked. If however the 3-bit control signal is 111, then, the first eight bits of the shift register output will be masked.

The decoder provides the intermediate control signals to a line 190 which, responsive to the mask control signal at input 192, causes the demultiplexer to transfer the intermediate control signals from its input 188 to its output 198 and to the mask control input 74 of the data mask 152. For example, if the data mask is to mask the first four bits, then the output 76 will provide an output wherein the first four bits (bits zero, one, two, and three) are all zero regardless of their original values.

The summer 44 in providing its functions of add, subtract, and/or two's compliment invert, will now be described with reference to Figure 1. When an operand has had its sign bit forced to zero, the original operand is first stored in the accumulator 50. The original sign bit, therefore, is provided at output 102 to input 118 of the multiplexer 116. When the operand is at the first input 78 of summer 44, the multiplexer 116 responsive to an enable signal on line 36 provides a control signal to input 124 to cause the operand at input 78 to be two's compliment inverted by the sign inverting means 45 of the summer 44. This also updates the sign of the operand to its original value and provides an operand at the first input which is properly negative in two's compliment form. This function may be performed even after the operand has been shifted by the unidirectional shift register 42 with the sign extended as will be seen hereinafter in the specific example.

When an operand at input 78 is to be sign inverted, either from a positive operand to a negative operand or from a negative operand to a positive operand, the multiplexer 116 receives at input 120 a sign invert control signal over control 34 from the instruction memory. The multiplexer 116, upon receipt of the enable signal over line 36 from the instruction memory 14, will then cause the sign inverting means 45 to sign invert the operand at input 78. For example, if the operand at input 78 is to be subtracted from the operand at input 80 and is a positive operand, the instruction memory 14 will provide over control line 34 a sign invert control signal to input 120 of multiplexer 116 to indicate that the operand at the first input 78 needs to be two's compliment sign inverted. The multiplexer 116 thereby provides a control signal to input 124 of summer 44 to cause the sign inverting means 45 of summer 44 to two's compliment invert the operand at input 78 so as to form a negative two's compliment operand. When the summer adds the new operand at input 78 to the operand at input 80, it will in effect be subtracting the operand at input 78 from the operand at input 80. Such two's compliment inversion by a summer is well known in the art.

As previously mentioned, the overflow detector 46 detects for overflow conditions. With further reference to Figure 1, and as previously mentioned, the arithmetic logic unit 12 has a finite multiple-bit capacity of, for example, nineteen bits. An overflow condition may result when two large positive two's compliment operands are added together to result in a small negative two's compliment result or when two large negative two's compliment operands are added together to produce a small positive two's compliment result. Both of these conditions are overflow conditions.

The overflow detector 46 by having its inputs 88, 90, and 92 coupled to input 78, 80, and output 84 respectively by summer 44, examines the input operands to be added and the resulting sum. If an overflow condition is detected, the overflow detector 46 provides a control signal at its output 94 which is received at input 96 of the overflow correction means 48 which corrects for the overflow. For example, if the overflow was caused by two large positive two's compliment operands being added together to result in a small negative two's compliment sum, the overflow correction 48 will override the result and provide at its output 98 the largest positive two's compliment sum possible. In other words, the overflow correction 98 will provide a multiple-bit two's compliment sum which has a sign bit of logical zero and magnitude bits which are all logical ones.

If the overflow condition resulted from two large negative two's compliment operands being added together to result in a small positive two's compliment sum, the overflow correction 48 will override this result responsive to the overflow detector 46 to provide the largest possible negative two's compliment sum at output 98. As a result, the overflow correction will provide at output 98 a two's compliment sum which has a sign bit equal to logical one and magnitude bits which are all logical zeros.

In either of the above-noted cases, the resulting corrected sums will be conveyed to either the accumulator 50 or to both the accumulator 50 and the temporary buffer 52. This makes the resulting sums available for further processing if necessary.

The operation of the improved digital limit checking system utilizing the arithmetic logic unit 12 of the digital signal processor 10 will now be illustrated in accordance with two specific examples. The first example is a limit check to determine whether an input operand is at least equal to a boundary value. The second example is a window comparison to determine whether an input operand is in between first and second boundary values, is less than the smaller boundary value or is greater than the larger boundary value.

In performing limit checking, the input operand and the boundary value are conveyed to the summer 44 over the first and second buses 56 and 58 respectively to inputs 78 and 80 of the summer 44. If both the input operand and the boundary value are positive multiple-bit binary values, the sign inverting means 44 inverts the multiple-bit operand at input 78 to a negative value responsive to the multiplexer 116 providing a control signal to input 124 of summer 44. Thereafter, the summer 44 adds the positive operand at input 80 to the sign inverted operand at input 78 to derive a difference value. The resulting difference value is a multiple-bit binary value which is conveyed to the accumulator 50 with the sign bit of the difference value being stored in the accumulator 50 as the most significant bit. While the difference value is derived in the summer 44, first and second return outputs are conveyed over the first and second buses 56 and 58 respectively to input 138 and input 142 respectively of the multiplexer 141 of the output means 28. The sign bit of the difference value is then conveyed from output 102 of accumulator 50 to control input 143 of multiplexer 141. If the sign bit is a logical zero indicating a positive difference value, the first return output value at input 138 of multiplexer 141 is selectively conveyed to the output 146 of multiplexer 141 and stored in latch 145. If the sign bit of the difference value is a logical one, indicating a negative difference value, the second return output at input 142 of multiplexer 141 will be selectively conveyed by the multiplexer 141 to its output 146 for storage in the latch 145.

For a window comparison, limit checking is first performed in the positive domain to derive a return output which is stored in latch 145. The latch 145 then drives the first bus 56 with the return output, resulting from the limit check in the positive domain, to input 78 of summer 44 through the unidirectional shift register 42 unshifted. Also, the input operand is stored in the accumulator 50 with its sign bit being the most significant bit of the accumulator 50. The sign bit in accumulator 50 is conveyed from output 102 to the input 118 of multiplexer 116. Upon receipt of an enable signal over line 36, the multiplexer 116 provides a control signal to the summer 44 at input 124 to cause the sign inverting means 45 of summer 44 to two's compliment sign invert the return output at input 78 if the sign of the input operand is negative.

The foregoing general operation may best be understood by making reference to the following aforementioned examples. The first specific example illustrates limit checking and the second example illustrates window comparison.

The limit checking example contemplates determining whether an input operand, x, is at least equal to a boundary value b. If the input operand is at least equal to the boundary value, in other words, greater than or equal to the boundary value, an output operand y is returned as a first output value and if the input operand is less than the boundary value, the output operand is returned as a second output value. In accordance with this first specific example, the input operand, x, is an 11-bit signed-magnitude input operand, the boundary value, b, is an 11-bit signed-magnitude boundary value, and the output operand, y, is an 8-bit signed-magnitude operand wherein the boundary value is equal to 256, wherein the first output value of the output operand is equal to 64, and wherein the second output value of the output operand is equal to the input operand, x, divided by four (x shifted right two places).

The input operand, x, the boundary value, b, and the output operand, y, are aligned in the arithmetic logic unit as illustrated below in Table 1.

**TABLE 1**

| **ALU Bit No.** | **18** | **17** | **16** | **15** | **14** | **13** | **12** | **11** | **10** | **9** | **8** | **7** | **6** | **5** | **4** | **3** | **2** | **1** | **0** |
|---|---|---|---|---|---|---|---|---|---|---|---|---|---|---|---|---|---|---|---|
| x | s | 9 | 8 | 7 | 6 | 5 | 4 | 3 | 2 | 1 | 0 | | | | | | | | |
| b | o | 1 | 0 | 0 | 0 | 0 | 0 | 0 | 0 | 0 | 0 | | | | | | | | |
| y | s | 6 | 5 | 4 | 3 | 2 | 1 | 0 | | | | | | | | | | | |

It will be noted that the input operand, x, has its sign bit in arithmetic logic unit bit 18 and its ten magnitude bits in arithmetic logic units bits 17 through 8. Similarly, the boundary value, b, has its most significant bit or sign bit in arithmetic logic unit bit 18 and its magnitude bits in arithmetic logic unit bits 17 through 8. Lastly, the output operand, y, has its sign bit in arithmetic logic unit bit 18 and its magnitude bits in arithmetic logic unit bits 17 through 11. Before the limit checking procedure begins, it is assumed that the input operand, x, resides in read buffer 20.

In the first operating cycle, the read buffer 20 drives the first bus 56 and the second bus 58 with the value of the input operand x. The input operand, x, is conveyed over the first bus 56, through the unidirectional shift register 42 unshifted, and to input 78 of summer 44. In parallel therewith, the input operand, x, is conveyed over the second bus 58 to input 80 of summer 44. The input operand, x, is added to itself in summer 44 without overflow protection so that the magnitude bits are allowed to overflow into the sign bit (bit 18 of the arithmetic logic unit). If bit 17 of the input operand, x, is a logical one, then adding the input operand to itself will force bit 18 of the arithmetic logic unit to be a logical one. As a result, the sum of the input operand added to itself may have arithmetic logic unit bit 18 set to either a logical zero or a logical one. The sum of the input operand added to itself (x + x) is conveyed from the summer 44 to the accumulator 50 and to the temporary buffer 52.

In the second operating cycle, the read buffer again drives the first bus with the input operand, x, where it is conveyed to the accumulator 50 and to the extra buffer 51. In conveying the input operand x to the accumulator 50, the input operand is conveyed through the unidirectional shift register 42 unshifted, to input 78 of summer 44 where it is added to a value of zero driven on the second bus 58, to derive the value of the input operand x through the overflow correction 48 to the accumulator 50 and to the extra buffer 51. As a result, the sum of the input operand (x + x) previously stored in the accumulator 50 is overwritten with the value of the input operand, x. Also, during the second operating cycle, the boundary value, b, is read from the data memory 18 into the read buffer 20.

During the third operating cycle, the extra buffer 51 drives the second bus 58 with the input operand, x, and conveys it to the input 80 of summer 44. The read buffer 20 drives the first bus 56 with the boundary value, b, to the universal shift register 42 where the boundary value b is shifted one place to the right so that the boundary value now represents a value of 256 (2¹⁶). The boundary value, b, which has been shifted one place to the right is conveyed from the unidirectional shift register 42 to input 78 of summer 44 where the boundary value is sign inverted by the sign inverting means 45. In other words, the sign inverting means 45 responsive to the control multiplexer 116 receiving a sign inverting control signal over line 34 to input 120 and an enable signal over line 36 from the instruction memory 14 performs a two's compliment inversion upon the shifted boundary value to render the boundary value a negative value. The negative boundary value at input 78 is then added to the input operand, x, at input 80 to derive a difference value minus b plus x which is conveyed to the accumulator 50. The difference value has a sign bit which is the most significant bit of the accumulator 50.

During the fourth and last operating cycle, the read buffer drives the first bus 56 with the boundary value, b, to input 138 of multiplexer 141 and the temporary buffer 52 drives the second bus 58 with the sum of the input operand added to itself (x + x) to input 142 of multiplexer 141. It will be noted that the input operand, b, is in the same format as is required for the first output value of the return operand y and the sum of the input operand added to itself (x + x) is in the same form as the second output return value of the input operand x divided by four. This results because if x is less than the boundary value of 256, arithmetic logic unit bits 18-16 of the input operand must have been '000'. Thus, adding the input operand to itself may set arithmetic logic unit bit 16 but not arithmetic logic unit bits 18 and 17. As a result, the sum of the input operand added to itself (x + x) must have the required format for the second return value.

The most significant bit of accumulator 50 is conveyed from output 102 to the control input 143 of multiplexer 141. If the most significant accumulator bit is a logical zero, denoting that the input operand, x, was greater than or equal to the boundary value, b, the first output return value at input 138 which is the value of the boundary value is selectively conveyed from input 138 to output 146 and stored in latch 145. If the most significant bit of accumulator 50 is a logical one denoting that the input operand was less than the boundary value, the value at input 142 which is the sum of the input operand added to itself (x + x) is selectively conveyed from input 142 to output 146 and stored in latch 145. The proper output operand is now stored in latch 145 and available to be returned for further processing.

Although the output return value may be displaced, it is in the proper format. To place the output value in the proper arithmetic logic unit bits, it may be conveyed from the latch 145 to the unidirectional shift register 42 and shifted the required number of bits to the right to derive a final output return value.

In performing the window comparison, it is determined whether an input operand x is greater than or equal to a first binary value of .75, whether the input operand is less than a second boundary value of -.75, or whether the input operand is in between the first and second boundary values. If the input operand is greater than or equal to the first boundary value of .75, the output operand will have a vague of .75. If the input operand is less than or equal to the second boundary value of -.75, the output operand will have a value of -.75. If the input operand is in between the first boundary value of .75 and the second boundary value of -.75, the output operand will have a value equal to the input operand.

The input operand is a 12-bit two's compliment value, the boundary values, b, are a 12-bit two's compliment value, and the output operand, y, is a 12-bit two's compliment value. The input operand x, the positive boundary value b, and the output operand y are aligned in the arithmetic logic unit as illustrated in Table 2 below.

**TABLE 2**

| **ALU Bit No.** | **18** | **17** | **16** | **15** | **14** | **13** | **12** | **11** | **10** | **9** | **8** | **7** | **6** | **5** | **4** | **3** | **2** | **1** | **0** |
|---|---|---|---|---|---|---|---|---|---|---|---|---|---|---|---|---|---|---|---|
| x | s | 0 | -1 | -2 | -3 | -4 | -5 | -6 | -7 | -8 | -9 | -10 | | | | | | | |
| b | o | 0 | 1 | 1 | 0 | 0 | 0 | 0 | 0 | 0 | 0 | 0 | | | | | | | |
| y | s | 0 | -1 | -2 | -3 | -4 | -5 | -6 | -7 | -8 | -9 | -10 | | | | | | | |

Before the window comparison begins, it is assumed that the first boundary value, b, is stored in the read buffer 20. To begin the window comparator operation, in the first operating cycle, the read buffer 20 drives the first bus 56 with the boundary value, b, through the unidirectional shift register 42 unshifted, through the summer 44, and to the accumulator 50 and the extra buffer 51 where it is stored. During the second half of the first cycle, the input operand, x, is read into the read buffer from the data memory 18.

During the second operand cycle, the read buffer 20 drives the first bus 56 with the input operand, x, to the accumulator 50 in the same manner as described above and over writes the boundary value in the accumulator 50 with the input operand x. Upon the completion of the second operating cycle, the boundary value is stored in the extra buffer 51, the input operand is stored in accumulator 50, and the input operand is stored in the read buffer 20.

In the third operating cycle, the accumulator 50 drives the first bus 56 with the input operand, x, through the shift register 42 unshifted and to the summer input 78. The sign inverting means 45 converts the input operand to a positive value if necessary to derive the absolute magnitude of the input operand and conveys the absolute value of the input operand, x, to the accumulator 50.

In the fourth operating cycle, the extra buffer 51 drives the second bus with the boundary value to input 80 of summer 44 and the accumulator 50 drives the first bus 56 with the absolute value of the input operand x through the universal shift register unshifted to input 78 of summer 44. The sign inverting means 45 two's compliment inverts the absolute value of the input operand, x, to a negative value. The summer 44 then adds the negative value of input operand to the boundary value b. Also while driving the first bus with the absolute value of the input operand, x, the absolute value of the input operand is stored in the test register 53. The difference value provided by the summer 44 is conveyed from the summer 44 to the accumulator 50 with its sign bit being stored in the most significant bit of the accumulator 50.

In the fifth operating cycle the test register 53 drives the first bus with the absolute magnitude of the input operand, x, to input 138 of multiplexer 141 and the extra buffer 51 drives the second bus with the positive boundary value, b, to input 142 of multiplexer 141. Also, the accumulator conveys the most significant bit stored therein to the multiplexer control input 143 from the output 102 of accumulator 50. If the most significant bit of accumulator 50 is a logical one, denoting that the absolute value of the input operand was greater than the positive boundary value, the multiplexer 141 selectively conveys the value of the boundary value from input 142 to the output 146 to be stored in latch 145. If the most significant bit of accumulator 50 is a logical zero denoting that the absolute value of the input operand, x, was less than the positive boundary value, b, the multiplexer 141 selectively conveys the absolute magnitude of the input operand, x, from input 138 to output 146 for storage in latch 145.

In the sixth operating cycle, the read buffer 20 drives the first bus 56 with the original value of the input operand, x, for conveyance through the unidirectional shift register 42 unshifted, the summer 44, and to the accumulator 50 with the sign bit of the original output operand, x, being stored in the most significant bit of the accumulator 50. During the second half of the seventh operating cycle, the latch 145 drives the first bus 56 with the selected output value to the input 78 of summer 44 through the unidirectional shift register 42. The accumulator 50 provides the sign bit of the original input operand from output 102 to input 118 of control multiplexer 116. If the sign of the original input operand, x, was negative, upon receipt of an enable signal from line 36, the control multiplexer 116 will cause the sign inverting means 45 of summer 44 to two's compliment invert the selected output at input 78 to render it a negative value. It will be seen, from the foregoing, that this provides the correct output operand for implementing the window comparison.

As will be seen from the foregoing, in both the limit checking and window comparison, the first and second outputs, one of which is to be returned, were derived from within the arithmetic logic unit 12 and driven on the first and second buses 56 and 58 to the multiplexer 141. Selection of one or the other of the first and second outputs was then made responsive to the most significant bit (sign bit) of the difference value stored in the accumulator. As a result, the limit checking and window comparison functions may be carried out in accordance with the present invention within the arithmetic logic unit of the digital signal processor 10. This permits such functions to be performed without jumps to subroutines by the sequencer 16 and instruction memory 14 and hardware external to the digital signal processor 10 for performing such function.

While a particular embodiment of the present invention has been shown and described, modifications may be made, and it is therefore intended to cover in the appended claims all such changes and modifications which fall within the true spirit and scope of the invention.

## Claims

1. A digital limit checking system for determining whether an operand is at least equal to or less than a boundary value, said system comprising:
a first bus;
a second bus;
first storage means coupled to said first bus for storing said boundary value;
second storage means coupled to said second bus for storing said input operand;
difference means including a first input coupled to said first bus for receiving said boundary value from said first storage means, a second input coupled to said second bus for receiving said input operand from said second storage means, and an output, said difference means determining the difference between said boundary value and said input operand and for providing a difference value having a positive or a negative sign; and
output means responsive to said sign of said difference value for providing a first output when said sign is positive and a second output when said sign is negative.

2. A system as defined in claim 1 wherein said output means comprises multiplexer means having a first input coupled to said first bus for receiving said first output, a second input coupled to said second bus for receiving said second output, an output for providing either said first or second output, and a control input for receiving said difference value sign, said multiplexer means passing to said output a selected one of either said first output or said second output from said first and second inputs responsive to said difference value sign.

3. A system as defined in claim 2 further including latch means coupled to said multiplexer means output for storing said selected first or second output.

4. A system as defined in claim 1 further comprising an accumulator coupled to said difference means for receiving said difference value and coupled to said output means for providing said output means with said difference value sign.

5. A system as defined in claim 4 wherein said boundary value, said input operand, said difference value, and said first and second outputs are multiple-bit binary numbers, each said binary number including a most significant bit, said most significant bit being a sign bit, and wherein said accumulator provides said output means with said most significant bit of said difference value multiple-bit binary number.

6. A system as defined in claim 1 wherein said difference means comprises a summer.

7. A system as defined in claim 6 wherein said boundary value and said input operand are binary numbers and wherein said summer is configured for sign inverting a binary number at one of its inputs for providing a sign inverted binary number, and wherein said summer adds the sign inverted binary number at said one input with the binary number at the other said input for providing said difference value.

8. A system as defined in claim 1 wherein said output means includes a first input coupled to said first bus for receiving said first output from said first bus, a second input coupled to said second bus for receiving said second output from said second bus, and an output, said output means selectively applying either said first or second output to said output responsive to said difference value sign.

9. A system as defined in claim 8 further including means for applying said difference value sign to said output means, and means for providing said first and second outputs to said first and second buses before said difference value sign is applied to said output means.

10. A system as defined in claim 9 further including latch means coupled to said output means output for storing said selectively applied first or second output.

11. A system as defined in claim 10 wherein said input operand has a positive or negative sign, and wherein said system further includes sign inverting means for sign inverting said selectively applied first or second output responsive to said input operand sign being negative.

12. A system as defined in claim 11 further comprising an accumulator for storing said input operand and said input operand sign, wherein said sign inverting means comprises said difference means and control means coupled to said accumulator, wherein a said latch means is coupled to said first bus for conveying said selectively applied first or second output to said difference means, and wherein said control means cause said difference means to sign invert said selectively applied first or second output responsive to receiving a negative input operand sign from said accumulator.

13. A digital limit checking system for determining whether a multiple-bit input operand is at least equal to or less than a multiple-bit boundary value, said system comprising:
a first multiple-bit bus;
a second multiple-bit bus;
first storage means coupled to said first bus for receiving and storing said multiple-bit boundary value;
second storage means coupled to said second bus for receiving and storing said multiple-bit input operand;
a multiple-bit summer having a first input coupled to said first bus for receiving said multiple-bit boundary value from said first storage means, a second input coupled to said second bus for receiving said multiple-bit input operand from said second storage means, and an output, said summer being configured for sign inverting either said boundary value or said input operand and providing a multiple-bit sum of said sign inverted boundary value or input operand and the noninverted boundary value or input operand, said multiple-bit sum having a sign bit;
a multiple-bit accumulator coupled to said summer for receiving and storing said multiple-bit sum including said sign bit; and
output means coupled to said accumulator for receiving said sign bit from said accumulator and providing either a first multiple-bit output or a second multiple-bit output responsive to said sign bit.

14. A system as defined in claim 13 wherein said output means include a first input coupled to said first bus for receiving said first output, a second input coupled to said second bus for receiving said second output, and an output, said output means selectively conveying said first or second output from said first and second inputs respectively to said output responsive to said sign bit.

15. A system as defined in claim 14 further including means for generating said first and second outputs and means for providing said first and second outputs to said first and second buses when said accumulator provides said output means with said sign bit.

16. A system as defined in claim 15 wherein said output means comprises a multiplexer.

17. A system as defined in claim 16 further including a latch coupled to said multiplexer for storing said selectively conveyed first or second output.

18. A system as defined in claim 15 wherein said input operand has a positive or negative sign bit, wherein said accumulator stores said input operand including said input operand sign bit, wherein said selectively conveyed first or second output is conveyed to said summer, and wherein said summer sign inverts said selectively conveyed first or second output responsive to said input operand sign stored in said accumulator.
